# EUROPEAN PATENT SPECIFICATION

(11) **EP 1 744 152 B1**
(45) Date of publication and mention of the grant of the patent: **23.04.2014**
(21) Application number: 06010445.2
(22) Date of filing: 24.06.2005
(51) Int. Cl.: G01N 27/12

(54) **Method of operating a dryer with a humidity sensor**
Verfahren zur Verwendung eines Trockners mit einem Feuchtesensor
Méthode d'utilisation d'un séchoir avec un capteur d'humidité

(43) Date of publication of application: 17.01.2007
(62) Divisional of application: 05013647.2
(73) Proprietor: Electrolux Home Products Corporation N.V., 1130 Brussel (BE)
(72) Inventor: Hergott, Norbert, 91207 Lauf (DE)
(74) Representative: Baumgartl, Gerhard Willi

(56) References cited:
- EP-A- 0 428 846
- EP-A- 1 236 826
- EP-A2- 0 353 524
- EP-A2- 1 380 831
- GB-A- 357 899
- US-A- 2 740 032
- US-A- 3 287 817
- US-A- 4 385 452
- US-A- 4 432 223
- US-A- 4 899 464
- US-A1- 2002 133 969
- EPCOS AG: "NTC Probe for HVAC and Home Appliances" EPCOS AG, 2002, XP002353583
- "Hygroclip- Humidity goes digital" ROTRONIC, [Online] February 2002 (2002-02), XP002353580 New York (USA) Retrieved from the Internet: URL:www.rotronic-usa.com/datasheets/ds/hyg roclip.pdf> [retrieved on 2005-11-09]
- LINDY COMPUTER CONNECTION TECHNOLOGY: "Humidity sensor" RACK MONITORING SYSTEM, [Online] 18 February 2005 (2005-02-18), XP002353581 Retrieved from the Internet: URL:www.lindy.com/uk/downloads/manuals/324 21.1pdf> [retrieved on 2005-11-09]
- ROBERT E MORLEY JR * ET AL: "In-Shoe Multisensory Data Acquisition System" IEEE TRANSACTIONS ON BIOMEDICAL ENGINEERING, IEEE SERVICE CENTER, PISCATAWAY, NJ, US, vol. 48, no. 7, July 2001 (2001-07), XP011007106 ISSN: 0018-9294
- BENBASAT A Y ET AL: "A wireless modular sensor architecture and its application in on-shoe gait analysis" PROCEEDINGS OF IEEE SENSORS 2003. 2ND. IEEE INTERNATIONAL CONFERENCE ON SENSORS. TORONTO, CANADA, OCT. 22 - 24, 2003, IEEE INTERNATIONAL CONFERENCE ON SENSORS, NEW YORK, NY : IEEE, US, vol. VOL. 2 OF 2. CONF. 2, 22 October 2003 (2003-10-22), pages 1086-1091Vol2, XP010690943 ISBN: 0-7803-8133-5
- BARTON J ET AL: "Development of distributed sensing systems of autonomous micro-modules" 2003 PROCEEDINGS 53RD. ELECTRONIC COMPONENTS AND TECHNOLOGY CONFERENCE. (ECTC). NEW ORLEANS, LA, MAY 27 - 30, 2003, PROCEEDINGS OF THE ELECTRONIC COMPONENTS AND TECHNOLOGY CONFERENCE, NEW YORK, NY : IEEE, US, vol. CONF. 53, 27 May 2003 (2003-05-27), pages 1112-1118, XP010648061 ISBN: 0-7803-7991-5

## Description

The present invention relates to a humidity sensor for detecting the humidity of articles like laundry or shoes while drying them in a dryer, in particular in a tumble dryer. Further it relates to a shoetree and a dryer having a humidity detector.

In a conventional dryer the humidity of the laundry placed into a drum of the dryer can be detected by measuring the air humidity or moisture of the drying air. Another way to detect the humidity is to use electrodes arranged at the drum and isolated to each other such that the conductivity as a measure for the humidity of the laundry is measured when the damp laundry bridges the two contacts. The drying process is stopped as soon as the air moisture or the conductivity across the electrodes falls below a predetermined level.

In the dryer of EP 1 236 826 A2 two electrodes of a moisture sensor are arranged close to the loading door and the loading opening of a drum. During the agitation of the drum, laundry items fall onto the moisture sensor and the moisture of the laundry item is detected by measuring the resistance value between the two electrodes of the moisture sensor.

GB 357,899 A discloses a shoetree for heating, stretching or preserving the shape of shoes. The main body of the shoetree is hollow and hot water or charcoal can be filled in to heat the shoe from inside what has also a drying effect.

In the paper "In-Shoe Multisensory Data Acquisition System", IEEE Transaction on Biomedical Engineering, Vol. 48, No. 7, 07/2001, R.E. Morley et al. propose to use a multi-data collection system integrated in the shoe worn by a patient that has diabetes or peripheral neuropathy. The acquisition system is used to detect an unnoticed trauma on the foot that can cause skin breakdown and one of the physical values detected is the humidity. For this purpose a humidity sensor is integrated in an insole enabling the patient to wear the shoe.

It is an object of the invention to provide a method of operating a dryer having a humidity sensor, which provide a reliable humidity detection if the articles to be dried are not agitated during the drying process.

The invention is defined in claim 1.

Particular embodiments are set out in the dependent claims.

In the conventional dryer the laundry or fabrics to be dried are placed in the drum which is rotated during the drying process. The drying air contacts the surface of the textile nearly homogeneously during the movement of the laundry within the drum. Some dryers have the option to put delicate laundry or shoes in a basket which is supported in a drum such that the delicate laundry or the shoes are not agitated. In this case the drying air can not be evenly distributed over the surface of the laundry or to the inside of the shoe and the drying process requires a longer time. At the same time the humidity at the inner portion of the folded laundry or on the inside of the shoe may be much higher than the humidity on the outside. As this is different from type to type of laundry or shoes, the time to sufficiently dry the articles may vary considerably. If the longest time for drying the articles would be set as a standard drying time, this could result in a waste of energy and time for such articles placed in the basket which are quickly dried.

To overcome such problems with articles which are not agitated during the drying process, the humidity sensor of the invention is adapted to be placed within, close to or in contact with the article to be dried. For example it is placed between folded towels or inside the shoe and the humidity in the critical region of the article can be exactly monitored and the drying process can be exactly timed to the degree of predefined or pre-selected residual humidity.

The humidity sensor has a humidity sensitive element and an electric cable connected to the at least one humidity sensitive element such that an electrical connection between a detector circuit and the humidity sensitive element is made by the electric wiring in the electric cable. The electric cable is a flexible cable such that the humidity sensitive element can be disposed by the user at any freely selectable place where he wants to detect the humidity. Via a connector the humidity sensor is preferentially detachably and temporarily connectable to a detector circuit, for example of a dryer. A detector circuit is an electrical or electronic circuit which preprocesses a signal from the humidity sensitive element and may supply a voltage or other signal to the humidity sensitive element to operate it.

In an embodiment the humidity sensitive element is a contact measurement element which measures the humidity dependent resistivity or conductivity between two contacts. However, the humidity sensitive element may also be an element detecting the air moisture or an electromagnetic wave emitting element detecting the humidity of the surrounding articles by electromagnetic wave emission and reception.

In a preferred embodiment the humidity sensitive element is a conductivity detector and comprises at least two conductive elements arranged at an outer surface of the sensor. Thereby, the surface of the article to be dried can be contacted and the detector circuit applies a voltage across the at least two conductive elements to analyze the resistance between the elements to analyze the conductivity as a measure of the humidity.

In a preferred embodiment the electric cable comprises a plug or a socket to detachably connect the humidity sensor to a mating socket or plug. If the humidity sensor is not used to detect the humidity, it is detached and may be deposited at a convenient place. If for example in the tumble dryer the drum is rotated and the laundry is agitated therein, the humidity sensor is removed. On the other hand, if for the drying process the drum is stopped or a fixed basket is mounted to the door or another non-rotated fixed part of the dryer, the humidity sensor is connected via the plug or socket to the detector circuit in the dryer and the sensor element is placed inside or in contact with the article to be probed.

According to a preferred embodiment, a shoetree is provided having an integrated humidity sensor such that the humidity can be detected inside a shoe when the shoetree is placed therein. Preferentially, the shoetree has at least one tensioning or clamping element such that the shoe is brought in form during the drying process. It is also preferred to arrange the humidity sensor at a front section of the shoetree such that the humidity in the area of the toes is detected, where an exchange of the humid air is lowest during the drying process.

According to a preferred embodiment a connector element is arranged at the dryer, for example at its body, to temporarily connect a humidity sensor including a shoetree as mentioned above. The connector element is externally accessible for the user without demounting parts of the dryer body (except a cap or cover designed for the connector element). Preferentially, the connector element is arranged in the region of a loading door of the dryer such that the user can easily plug the sensor's connector and guide the sensor element into the drum's inside using the flexible cable. It is not necessary to guide the cable to the outside of the dryer through the door or at the rim of the door. In a preferred embodiment the connector element of the dryer is arranged at an air channel or a mounting frame close to the loading door.

In one embodiment the dryer has a connection detector which detects whether a humidity sensor is connected to the connector element or not. For example a switch may be located at the plug or socket and gives a switching signal to the sensor circuit, if the humidity detector is connected. By this connection signal it can be provided for example that the drum rotation is automatically stopped, if the humidity sensor is connected. Or if the user selects a drying program where the drum is agitated, he receives a warning that the separate humidity sensor is connected and has to be removed prior to rotating the drum.

In a preferred embodiment the electrical contacts of the connector in the dryer are combined with a mounting element for mounting a support or storing device in a drum of the dryer. Thereby, if the support or storing device is placed within the drum, the electrical connection to the humidity sensor is established in one step. At least the connector element is integrated in the support or storing device. In a particular embodiment a part of the cable or the complete sensor is additionally integrated in the support or storing device. No separate electrical connection is required. For example the support or storing device may be provided with the flexible cable and the sensor element can be placed between the articles to be dried. Or the humidity sensor can be integrated in a surface of the support or storing device.

In a preferred embodiment the humidity sensor having an electric cable for freely positioning the sensor element in the drum is permanently connected to the dryer and the detector circuit therein. Via the flexible electric cable the sensor can be positioned in a drying compartment or taken out of the drying compartment, e.g. a drum of a tumble dryer.

Reference is made in detail to preferred embodiments of the invention, examples of which are illustrated in the accompanying drawings which show;
- Fig. 1: a schematic diagram of humidity sensors integrated in shoetrees and the electrical wiring,
- Fig. 2: a shoe with a shoetree as shown in Fig. 1 placed in a drum, and
- Fig. 3: a rack arranged within a drum.

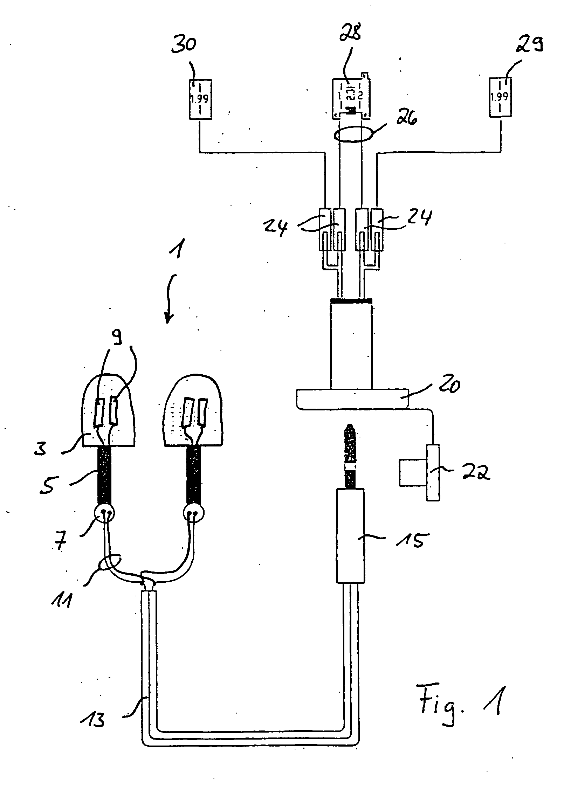

Fig. 1 shows a schematic diagram of a pair of shoetrees 1 including a humidity sensor and the electrical wiring between the humidity sensor and sensor electronics of a tumble dryer. Each shoetree 1 has a front section 3, a heel section 7 and a spiral spring 5 connecting the two sections 3, 7. On the upper surface of the front section two metal plates 9 formed of stainless steel are arranged in parallel and are connected to wires 11 guided through the spiral spring 5 to the heel section 7 where the wires 11 exit into a cable 13. The metal plates 9 of both shoetrees 1 are connected in parallel such that the conductivities between both plate pairs are measured simultaneously. At the end of the cable 13 a plug 15 is provided having a contact tip. The contact tip of the plug 15 is insertable into a socket 20. The socket 20 is mounted at the opening region of an air channel (not shown). The air channel is part of an air circulation system of the tumble dryer and has its opening directly neighboring the door opening of the dryer.

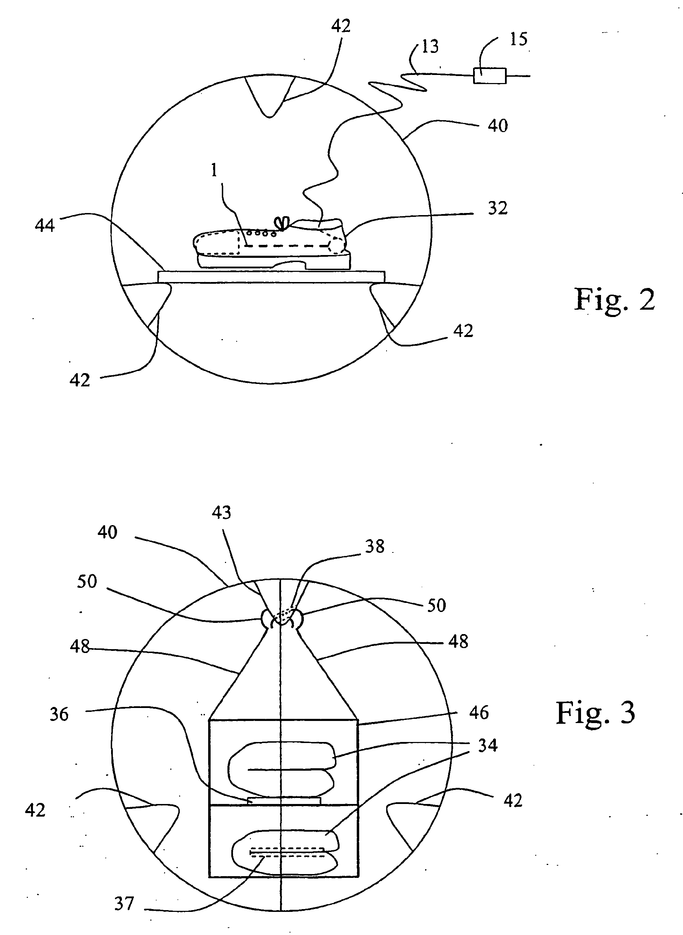

When the user wants to dry shoes in the dryer (see Fig. 2) the shoetrees 1 are placed inside the shoes 32 and the shoes are then placed within the drum. The plug 15 is inserted into the socket 20 and the door of the dryer is closed. Of course, the socket 20 is arranged such that there is enough space to plug and unplug plug 15 and to guide the flexible cable 13 from the socket to the shoetrees inside the drum without passing the gasket which is sealing the door to the dryer's housing. If the shoetrees 1 are not in use, the arrangement is unplugged and stored outside the drum. To avoid collection of dirt and fluff in the open socket it can be closed by a cap 22.

Socket 20 is electrically connected to contacts 24. At the contacts 24 lines 26 from a sensor electronics 28 are split into two parallel lines, the one going to socket 20 and from there to the shoetrees 1. One wire of the other parallel lines runs to a ground contact 29 of the dryer and one wire runs to a sliding contact 30. In the normal tumble drying process contacts 29 and 30 are used to make conductivity measurements within the drum during the rotation of the drum. In this case, the two electrically isolated contacts for the conductivity measurement are placed at the inside of the drum and one element is connected via ground connection and the other via the sliding contact 30 to the sensor electronics 28. Sensor electronics 28 processes the signal either from the inside of the drum or from the shoetree 1 or other humidity detector connected to socket 20 and outputs a preprocessed signal to the control electronics of the tumble dryer.

Fig. 2 shows one example for using the shoetrees shown in Fig. 1. In this case, the tumble dryer has a special program or a program option which stops the rotation of the drum for drying operation with the drum at halt. Of course, the inventive humidity detector can also be used when the drum is rotating, for example when a basket or a similar support is used which is mounted at the opening or at the door of the dryer such that the basket or support does not rotate. In the arrangement of Fig. 2 a shelf 44 is placed between rips 42' of a drum 40 which is not rotating during the drying process. A pair of shoes 32 is placed on the shelf 44 and the shoetrees 1 have been inserted into the shoes 32. As mentioned above, the plug 15 is inserted into the socket 20 close to the door's opening.

Fig. 3 shows two other examples for the humidity sensor. Again, the drum 40 is stopped during the special drying program and a rip 43 is provided with contact holes 38. A rack 46 is placed in the inside of the drum 40 and hooks 50 connected via cords 48 to the rack are hooked into the contact holes 38. Towels 34 are shown as placed in the compartments of the rack 46.

In the first embodiment shown in Fig. 3 a contact plate 37 is placed in the lower towel 34. Plate 37 has two electrodes spaced apart from each other for contacting the towel (similar to metal plates 9 shown in Fig. 1). As in the example of Fig. 2, a cable having a plug 15 is connected to contact plate 37 and the plug 15 is inserted into the socket 20.

In the second embodiment of Fig. 3 a sensor plate 36 is integrated in the upper compartment shelf of the rack 46. The plate 36 is connected via flexible wires within the bottom and side walls of the rack which are guided through the cords 48 to the hooks 50 where they electrically contact corresponding contact elements within the contact holes 38. The contact elements within the contact holes 38 are thereby connected in parallel to electrodes (not shown) in the drum. The drum's electrodes are used for detecting the conductivity of tumbled laundry when the drum 40 is rotated.

### Reference Numerals List

- 1: shoetree
- 3: front section
- 5: spiral spring
- 7: heel section
- 9: plate
- 11: wire
- 13: cable
- 15: plug
- 20: socket
- 22: cap
- 24: connector
- 26: wire
- 28: detector circuit

- 29: ground contact
- 30: sliding contact
- 32: shoe
- 34: towel
- 36: sensor plate
- 37: contact plate
- 38: contact hole
- 40: drum
- 42, 43: rip
- 44: shelf
- 46: rack
- 48: cord
- 50: hook

## Claims

1. Method of operating a dryer, in particular tumble dryer or washing machine having a dryer function, the dryer comprising:
a drying compartment (40), in particular a drum,
a humidity sensor (1, 36, 37) adapted to detect the humidity of an article,
a detector circuit (28) adapted to receive a signal from the humidity sensor, and
an electrical cable (13) electrically connecting the humidity sensor to the detector circuit, wherein the humidity sensor comprises:
at least one humidity sensitive element (9),
the electrical cable (13) connected to the at least one humidity sensitive element (9), and
a connector (15) adapted to electrically connect the electrical cable (13) to the detector circuit (28),
the method comprising:
placing the humidity sensor (1, 36, 38) at a freely selected position within or in contact with an article to be dried, and
not agitating the article to be dried during a drying process,
wherein the electrical cable (13) is flexible.

2. Method according to claim 1, wherein the connector (15) is a plug or a socket and the method comprises detachably connecting the electrical cable (13) to the detector circuit (28).

3. Method according to claim 1 or 2, wherein the humidity sensor is detecting humidity of an article (32, 34) by contacting the article, the at least one humidity sensitive element (9) comprising:
at least two conductive elements, and
at least one supporting element (3) supporting each of the conductive elements at a distance and being electrically insulated to the other conductive elements,
wherein the electrical cable (13) comprises at least two wires (11) each electrically connected to one of the conductive elements.

4. Method according to claim 3, wherein the at least one humidity sensitive element (9) is a conductivity detector and the method comprises arranging the at least two conductive elements at an outer surface of the sensor (1).

5. Method according to any of the previous claims, comprising detecting the humidity in a shoe (32) by means of a shoetree (1) having the humidity sensor integrated therein.

6. Method according to claim 5, comprising arranging the humidity sensor at a front section (3) of the shoetree, in particular in the region of the pad or the instep.

7. Method according to any of claims 1 to 4, comprising integrating the humidity sensor at least partially in a storing device (46), in particular a basket or a rack, adapted to store articles to be dried in a drum of a dryer.

8. Method according to any of the previous claims, comprising temporarily connecting the humidity sensor to the detector circuit (28) by means of a connector element (20, 38).

9. Method according to claim 8, comprising arranging the connector element (20) in the region of a loading door of the dryer, in particular at an air channel or at a mounting frame for a lint filter.

10. Method according to claim 8 or 9, comprising arranging the connector element (38) or an additional connector element at a drum of the dryer.

11. Method according to claim 10, comprising supporting a storing device (44, 46) in the drum (40) of the dryer by means of the connector element (38) combined with a mounting element.

12. Method according to any of claims 8 to 11, comprising covering the electrical contacts of the connector (20, 38) if the humidity sensor (1, 36, 37) is disconnected by means of a cap (22).

13. Method according to any of claims 8 to 12, comprising receiving the humidity sensor (1, 36, 37) in a deposition compartment arranged at the dryer's body.

14. Method according to any of claims 8 to 13, comprising detecting the humidity sensor (1, 36, 37) being connected and transmitting a connect signal to a control unit of the dryer by means of a connection detector.

15. Method according to any of the previous claims, comprising receiving the humidity sensor (1, 36, 37) and at least a portion of the flexible cable (13) in a deposition compartment arranged at the dryer's body.

## Patentansprüche

1. Verfahren zum Betreiben eines Trockners, insbesondere eines Trommeltrockners oder einer Waschmaschine mit Trocknerfunktion, wobei der Trockner umfasst:
ein Trocknungsabteil (40), insbesondere eine Trommel,
einen Feuchtesensor (1, 36, 37), der dazu geeignet ist,
die Feuchtigkeit eines Artikels zu erfassen, eine Detektorschaltung (28), die geeignet ist, ein Signal vom Feuchtesensor zu empfangen, und ein Stromkabel (13), das den Feuchtesensor mit der Detektorschaltung elektrisch verbindet, wobei der Feuchtesensor umfasst:
mindestens ein feuchtigkeitsempfindliches Element (9), das mit dem mindestens einen feuchtigkeitsempfindlichen Element (9) verbundene Stromkabel (13), und
eine Steckverbindung (15), die dazu geeignet ist, das Stromkabel (13) mit der Detektorschaltung (28) elektrisch zu verbinden,
wobei das Verfahren umfasst:
Platzieren des Feuchtesensors (1, 36, 38) an einer frei wählbaren Position in oder mit Kontakt zu einem zu trocknenden Artikel, und
Bei nicht bewegten zu trocknenden Artikel während eines Trocknungsvorgangs, wobei das Stromkabel (13) flexibel ist.

2. Verfahren gemäß Anspruch 1, wobei die Steckverbindung (15) ein Stecker oder eine Steckdose ist und das Verfahren das trennbare Verbinden des Stromkabels (13) mit der Detektorschaltung (28) umfasst.

3. Verfahren gemäß Anspruch 1 oder 2, wobei der Feuchtesensor die Feuchtigkeit eines Artikels (32, 34) durch Kontaktieren des Artikels erfasst und wobei das mindestens eine feuchtigkeitsempfindliche Element (9) Folgendes umfasst:
mindestens zwei leitende Elemente, und
mindestens ein Trägerelement (3), das jedes der leitenden Elemente in einem Abstand und isoliert von den anderen leitenden Elementen trägt,
wobei das Stromkabel (13) mindestens zwei Drähte (11) umfasst, die jeweils mit einem der leitenden Elemente elektrisch verbunden sind.

4. Verfahren gemäß Anspruch 3, wobei das mindestens eine feuchtigkeitsempfindliche Element (9) ein Leitfähigkeitsdetektor ist und das Verfahren die Anordnung der mindestens zwei leitenden Elemente an einer Außenoberfläche des Sensors (1) umfasst.

5. Verfahren gemäß einem der vorangehenden Ansprüche, das das Erfassen der Feuchtigkeit in einem Schuh (32) mittels eines Schuhspanners (1) mit dem darin integrierten Feuchtesensor umfasst.

6. Verfahren gemäß Anspruch 5, das das Anordnen des Feuchtesensors in einem vorderen Abschnitt (3) des Schuhspanners umfasst, insbesondere im Bereich des Ballens oder des Rists.

7. Verfahren gemäß einem der Ansprüche 1 bis 4, das das wenigstens teilweise Integrieren des Feuchtesensors in einer Speichervorrichtung (46) umfasst, insbesondere in einem Korb oder einem Gestell, die dazu geeignet sind, in einer Trommel eines Trockners zu trocknende Artikel aufzunehmen.

8. Verfahren gemäß einem der vorangehenden Ansprüche, das das vorübergehende Verbinden des Feuchtesensors mit der Detektorschaltung (28) mittels eines Verbindungselements (20, 38) umfasst.

9. Verfahren gemäß Anspruch 8, das das Anordnen des Verbindungselements (20) im Bereich einer Ladetür des Trockners umfasst, insbesondere an einem Luftkanal oder an einem Montagerahmen für ein Flusenfilter.

10. Verfahren gemäß Anspruch 8 oder 9, das das Anordnen des Verbindungselements (38) oder eines zusätzlichen Verbindungselements an einer Trommel des Trockners umfasst.

11. Verfahren gemäß Anspruch 10, das das Festhalten einer Speichervorrichtung (44, 46) in der Trommel (40) des Trockners mittels des Verbindungselements (38) in Kombination mit einem Montageelement umfasst.

12. Verfahren gemäß einem der Ansprüche 8 bis 11, das das Abdecken der elektrischen Kontakte der Steckverbindung (20, 38) mit einer Kappe (22) umfasst, wenn der Feuchtesensor (1, 36, 37) getrennt ist.

13. Verfahren gemäß einem der Ansprüche 8 bis 12, das das Aufnehmen des Feuchtesensors (1, 36, 37) in einem Ablagefach umfasst, das am Körper des Trockners angeordnet ist.

14. Verfahren gemäß einem der Ansprüche 8 bis 13, das das Erfassen des verbundenen Feuchtesensors (1, 36, 37) und das Übertragen eines Verbindungssignals an eine Steuerungseinheit des Trockners mittels eines Verbindungsdetektors umfasst.

15. Verfahren gemäß einem der vorangehenden Ansprüche, das das Aufnehmen des Feuchtesensors (1, 36, 37) und mindestens eines Teils des flexiblen Kabels (13) in einem Ablagefach umfasst, das am Körper des Trockners angeordnet ist.

## Revendications

1. Procédé de fonctionnement d'un séchoir, en particulier d'un sèche-linge ou d'un lave-linge ayant une fonction de séchoir, le séchoir comprenant :
un compartiment de séchage (40), en particulier un tambour,
un capteur d'humidité (1, 36, 37) apte à détecter l'humidité d'un article,
un circuit de détection (28) apte à recevoir un signal du capteur d'humidité, et
un câble électrique (13) connectant électriquement le capteur d'humidité au circuit de détection, où le capteur d'humidité comprend :
au moins un élément réagissant à l'humidité (9),
le câble électrique (13) étant connecté à au moins un élément réagissant à l'humidité précité (9), et
un connecteur (15) apte à connecter électriquement le câble électrique (13) au circuit de détection (28),
le procédé comprenant :
placer le capteur d'humidité (1, 36, 38) à une position librement sélectionnée dans ou en contact avec un article à sécher, et
ne pas agiter l'article à sécher durant un processus de séchage,
où le câble électrique (13) est flexible.

2. Procédé selon la revendication 1, dans lequel le connecteur (15) est une fiche ou une prise, et le procédé comprend la connexion détachable du câble électrique au circuit de détection (28).

3. Procédé selon la revendication 1 ou 2, dans lequel le capteur d'humidité détecte l'humidité d'un article (32, 34) en venant en contact avec l'article, le au moins un élément réagissant à l'humidité (9) comprenant :
au moins deux éléments conducteurs, et
au moins un élément de support (3) supportant chacun des éléments conducteurs à une distance et étant électriquement isolé des autres éléments conducteurs,
où le câble électrique (13) comprend au moins deux fils (11), chacun connecté électriquement à un des éléments conducteurs.

4. Procédé selon la revendication 3, dans lequel au moins un élément réagissant à l'humidité précité (9) est un détecteur de conductivité, et le procédé comprend l'agencement des au moins deux éléments conducteurs à une surface extérieure du capteur (1).

5. Procédé selon l'une quelconque des revendications précédentes, comprenant la détection de l'humidité dans une chaussure (32) au moyen d'un embauchoir (1) dans lequel le capteur d'humidité est intégré.

6. Procédé selon la revendication 5, comprenant l'agencement du capteur d'humidité à une section frontale (3) d'un embauchoir, en particulier dans la région du coussinet ou du coup de pieds.

7. Procédé selon l'une quelconque des revendications 1 à 4, comprenant l'intégration du capteur d'humidité au moins partiellement dans un dispositif de stockage (46), en particulier dans un panier ou étagère, apte à stocker des articles à sécher dans un tambour d'un séchoir.

8. Procédé selon l'une quelconque des revendications précédentes, comprenant la connexion temporaire du capteur d'humidité au circuit de détection (28) au moyen d'un élément de connexion (20, 38).

9. Procédé selon la revendication 8, comprenant l'agencement de l'élément connecteur (20) dans la région d'une porte de chargement du séchoir, en particulier à un canal d'air ou à un cadre de montage pour un filtre à charpie.

10. Procédé selon la revendication 8 ou 9, comprenant l'agencement de l'élément connecteur (38) ou d'un élément connecteur additionnel à un tambour du séchoir.

11. Procédé selon la revendication 10, comprenant le support d'un dispositif de stockage (44, 46) dans le tambour (40) du séchoir au moyen de l'élément connecteur (38) combiné avec un élément de montage.

12. Procédé selon l'une quelconque des revendications 8 à 11, comprenant le recouvrement des contacts électriques du connecteur (20, 38) si le capteur d'humidité (1, 36, 37) est déconnecté au moyen d'un capuchon (22).

13. Procédé selon l'une quelconque des revendications 8 à 12, comprenant la réception du capteur d'humidité (1, 36, 37) dans un compartiment de dépôt agencé au corps du séchoir.

14. Procédé selon l'une quelconque des revendications 8 à 13, comprenant la détection du capteur d'humidité (1, 36, 37) connecté et transmettant un signal de connexion à une unité de commande du séchoir au moyen d'un détecteur de connexion.

15. Procédé selon l'une quelconque des revendications précédentes, comprenant la réception du capteur d'humidité (1, 36, 37) et d'au moins une portion du câble flexible (13) dans un compartiment de dépôt agencé au corps du séchoir.
